**Europäisches Patentamt**

**European Patent Office**

**Office européen des brevets**

(11) Veröffentlichungsnummer: **0 472 206 A1**

# EUROPÄISCHE PATENTANMELDUNG

(21) Anmeldenummer: **91114150.5**

(51) Int. Cl.⁵: **A01K 1/015**

(22) Anmeldetag: **23.08.91**

(30) Priorität: **24.08.90 DE 4026752**

(43) Veröffentlichungstag der Anmeldung:
**26.02.92 Patentblatt 92/09**

(84) Benannte Vertragsstaaten:
**AT BE DE DK ES FR GB IT NL SE**

(71) Anmelder: **Michel, Heinrich**
**Marienstrasse 2**
**W-5419 Marienhausen(DE)**

(72) Erfinder: **Michel, Heinrich**
**Marienstrasse 2**
**W-5419 Marienhausen(DE)**

(74) Vertreter: **Herrmann-Trentepohl, Werner,**
**Dipl.-Ing. et al**
**Patentanwälte Herrmann-Trentepohl,**
**Kirschner, Grosse, Bockhorni & Partner**
**Schäferstrasse 18 Postfach 1140**
**W-4690 Herne 1(DE)**

(54) **Bodenbelag aus plattenförmigen Kunststoffkörpern.**

(57) Bei einem Bodenbelag aus plattenförmigen Kunststofformkörpern (2, 3; 5, 6), welche auf ihrer Unterseite (10) eine Mehrzahl paralleler Roststäbe (7-9) und in der Platte untereinander und zu den Roststäben (7-9) parallele Schlitze (11-15) aufweisen, die in Feldern (16-28) angeordnet sind, welche von den sich rechtwinklig kreuzenden und sich über die Trittfläche erhebenden Rippen (29-38) begrenzt sind, welche Vertiefungen mit Schrägflächen (39-41) aufweist, die von den Flanken der Rippen (29-38) ausgehen und auf einem ebenen Taschenboden (42) enden, wobei die rechtwinklig zu den Schlitzen (11-15) verlaufenden parallelen Plattenseiten (43-44) derart verzahnt sind, daß bei ineinandergreifenden Zahnköpfen (46) und Zahnlücken (49) die gegenüberliegenden Plattenkanten (50, 51) der mit Hilfe von Aussparungen (53, 54) in den Roststäben mit Rostträgern formschlüssigen Formkörper (2, 3; 5, 6) ausgefluchtet sind, ist erfindungsgemäß vorgesehen, daß die Rippen (32) der Randfelder (16-26) an den Verzahnungen (46-49) die Zahnflanken (47, 48) schneiden und über den Rostträgeraussparungen (53, 54) angeordnet sind.

EP 0 472 206 A1

Die Erfindung betrifft einen Bodenbelag aus plattenförmigen Kunststoffkörpern gemäß dem Oberbegriff des Anspruches 1.

Die Erfindung bezieht sich insbesondere auf die Tierhaltung, vorzugsweise die Schweinehaltung, bei der der erfindungsgemäße Bodenbelag in Ställen eingesetzt wird. Dieser Bodenbelag läßt sich im übrigen überall dort verwenden, wo ähnliche Bedingungen durch Feuchtigkeit und Schmutz gegeben sind, was z.B. in Sanitärräumen oder Zelten der Fall sein kann. Die Erfindung wird im folgenden anhand ihres bevorzugten Anwendungsgebietes der Schweinehaltung beschrieben.

Die Verwendung von Kunststoffformkörpern zur Zusammenstellung eines Bodenbelages gewährleistet eine tierfreundliche Aufstandsfläche und eine rationelle Fertigung, die bei spritzfähigen Kunststoffen in Spritzgußformen von Extrudern die Massenfertigung der Formkörper in einheitlichen Abmessungen ermöglicht. Die erfindungsgemäßen plattenförmigen Kunststoffformkörper haben infolge ihrer Roststäbe und ihrer zwischen den Roststäben in der Platte ausgesparten Schlitze eine Selbstreinigungswirkung. Denn durch die Schlitze läuft die Gülle von selbst ab, so daß die Trittfläche trockengehalten wird. Die Tiere pressen Kot und andere feste Verunreinigungen mit ihren Hufen durch die Schlitze nach unten und machen dadurch die Trittfläche der Kunststoffformkörper frei. Hierbei bieten die Rippen wegen ihrer Erhabenheit über der Trittfläche einen Gleitschutz in Verbindung mit den zwischen den Rippen ausgebildeten Taschen, welche die Hufe führen und aufnehmen und dadurch das Stolpern der Tiere über den Rippen verhindern. Die Taschen bleiben während der Nutzungsdauer des Bodenbelages auch erhalten, weil sie sich unter der Einwirkung der Hufe wegen des auf den Schrägflächen eintretenden Verschleißes ständig vertiefen. Sie führen außerdem zu einer Verstärkung des erwähnten Reinigungseffektes, weil die Hufe der Tiere dann die Verunreinigungen durch die Schlitze nach unten passieren.

Diese erfindungsgemäß gestalteten plattenförmigen Kunststoffformkörper bilden einen durchgehenden Bodenbelag, der infolge des Formschlusses der ineinandergreifenden Verzahnungen seiner parallelen Plattenkanten einen dauerhaften Zusammenhalt gewährleistet und verhindert, daß in dem Bodenbelag Lücken auftreten, welche zu Verletzungen der Tiere führen würden. Da die mit den ineinandergreifenden Verzahnungen verbundenen plattenförmigen Kunststoffformkörper außerdem infolge ihrer über feste Träger greifenden Aussparungen in den Roststäben formschlüssig auf den fest verlegten Trägern festgehalten werden, können sich die Platten nicht verschieben und die Zahnungen außer Eingriff bringen. Diese ineinandergreifenden Zahnungen wirken außerdem formschlüssig in Längsrichtung der Träger. Deshalb bedarf der Anschluß der Platten an den nicht verzahnten Plattenkanten nur eines geringen Aufwandes.

Diese so ausgebildeten plattenförmigen Kunststofformkörper sind an sich bekannt. Die Verzahnung setzt eine von den Schlitzen nicht unterbrochene Randfläche voraus, die man in der vorbekannten Ausführung durch Verlegung der Verzahnung an den äußeren Rand der Platten geschaffen hat. An der einen Plattenseite liegt deswegen die Rippe der randnahen Felder hinter der Verzahnung, während sie an der gegenüberliegenden Plattenseite in das randnahe Feld verlegt ist. Die zum Formschluß mit den Trägern dienenden Aussparungen der Roststäbe, welche die Zahnflanken schneiden müssen, liegen daher neben den randnahen Rippen und in Bereichen der randnahen Felder, die durch die Schrägflächen bereits einen geringen Materialquerschnitt aufweisen. Das führt in der Praxis insbesondere dann, wenn der Formschluß bereits eine gewisse Größenordnung erreicht hat, dazu, daß die plattenförmigen Kunststoffformkörper in den randnahen und von der Verzahnung geschwächten Plattenbereichen brechen. Dann verletzen sich die Tiere an den Bruchkanten.

Außerdem erweist es sich als nachteilig, daß der Übergang von den Rippen auf die Schrägflächen im Bereich der Verzahnung einen erheblichen Höhenunterschied ergibt, was dazu führt, daß die Tiere mit ihren Hufen abgleiten oder stolpern.

Der Erfindung liegt die Aufgabe zugrunde, auf einfache Weise die Bruchgefahr insbesondere an den verzahnten Kanten der plattenförmigen Kunststoffformkörper zu vermeiden und die Stolper- und Abgleitgefahr an diesen Bereichen des Bodenbelages zu vermindern.

Diese Aufgabe löst die Erfindung mit den Merkmalen des Anspruches 1. Weitere Merkmale der Erfindung sind Gegenstand der Unteransprüche.

Gemäß der Erfindung werden die als Gleitschutz vorgesehenen Rippen, in denen eine Materialanhäufung durch ihre erhabene Formgebung vorhanden ist, zur Verstärkung der verzahnten Plattenränder herangezogen, indem diese über den Aussparungen der Roststäbe angeordnet werden, weshalb sie ebenso wie diese Aussparungen die Zahnflanken nunmehr schneiden. Dabei handelt es sich um eine vom Vorbekannten abweichende Formgebung, welche eine Änderung der bisherigen Herstellungsverfahren nicht zur Voraussetzung hat, sondern nur eine Änderung der Formen erforderlich macht, in denen die Formkörper aus Kunststoff hergestellt werden.

Die Erfindung hat den Vorteil, daß sie die Lebensdauer des Plattenbelages verlängert, ohne daß mehr Material eingesetzt zu werden braucht. Da die Rippen nunmehr die Zahnflanken schneiden, liegen sie nicht mehr in den Schrägen der Taschen randnaher Felder, wodurch die Höhenunterschiede gemildert und die Stolpergefahr herabgesetzt wird. Die Erfindung hat außerdem den Vorteil, daß sich die Schlitze verlängern lassen, weil diese bis zu den Rippenflanken und damit an die Verzahnung selbst herangeführt werden können. Dadurch wird an den Verbindungen der plattenförmigen Kunststoffhohlkörper im Bodenbelag die Sauberhaltung der Trittfläche erleichtert und an den Verzahnungen die Ablagerung von Schmutzansammlungen verhindert.

Aus diesen Gründen ist es auch erwünscht, die rechtwinklig zu den verzahnten Plattenkanten ausgefluchteten Felder der plattenförmigen Kunststoffhohlkörper symmetrisch auszubilden, was mit den Merkmalen des Anspruches 2 möglich ist. Danach haben diese Felder nicht nur die gleiche Flächengröße, sondern auch gleiche Schlitzanordnungen und -abmessungen. Diese sind so gewählt, daß sich durch die Unterbrechungen der Mittelschlitze eine Verstärkung des Taschenbodens und damit an einer Stelle ergibt, die ohnehin eine verhältnismäßig geringe Materialansammlung aufweist.

Bei einer weiteren zweckmäßigen Ausführung der Erfindung, die im Anspruch 3 wiedergegeben ist, vergrößert man den Formschluß benachbarter Platten durch Verlängerung der Verzahnungskanten, was durch deren Verstärkung gemäß der Erfindung erst ermöglicht wird. Auf diese Weise kommt man zu einem verbesserten Zusammenhalt des Plattenbelages, ohne daß zusätzliche Maßnahmen hierfür getroffen zu werden brauchen.

Die Einzelheiten, weitere Merkmale und andere Vorteile der Erfindung ergeben sich aus der nachfolgenden Beschreibung einer Ausführungsform des neuen Bodebelages anhand der Figuren in der Zeichnung; es zeigen

Fig. 1    eine Draufsicht auf zwei benachbarte plattenförmige Kunststofformkörper gemäß der Erfindung, die an einer verzahnten Kante miteinander formschlüssig verbunden sind,

Fig. 2    zwei benachbarte plattenförmige Kunststoffhohlkörper gemäß der Erfindung, welche an den rechtwinklig zu den verzahnten Kanten verlaufenden Plattenkanten miteinander verbunden sind,

Fig. 3    einen Schnitt längs der Linie III-III der Fig. 1 und

Fig. 4    einen Schnitt längs der Linie IV-IV der Fig. 1.

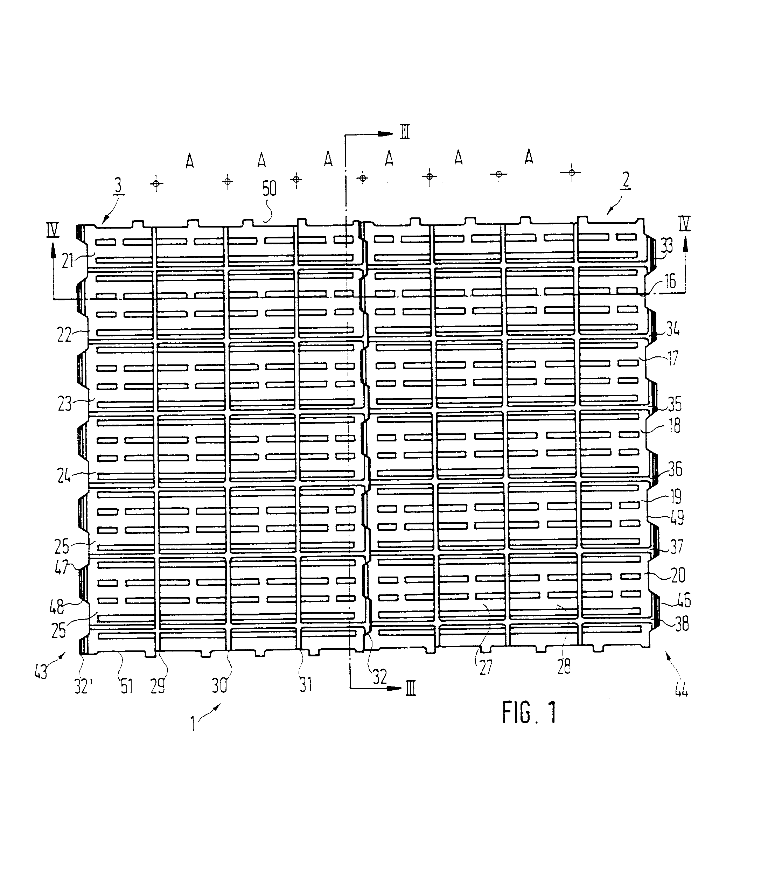

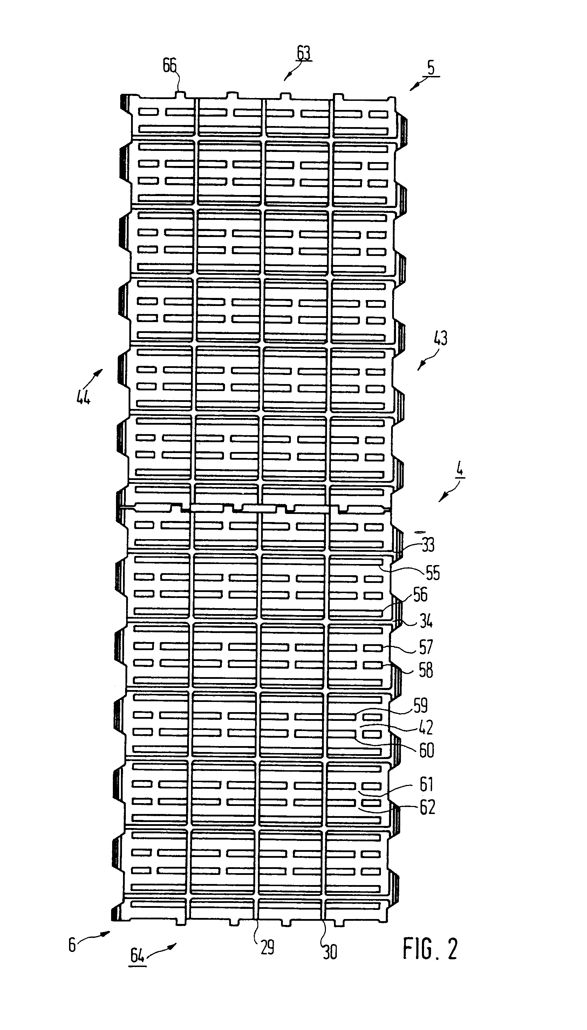

Der in den Fig. 1 und 2 dargestellte Bodenbelag (1) ist nur teilweise wiedergegeben. Dargestellt sind in Fig. 1 zwei benachbarte plattenförmige Kunststoffkörper (2, 3) von unter sich gleicher Ausbildung und Formgebung. In der Darstellung der Fig. 2 sind die gleichen Kunststofformkörper, jedoch an einer anderen Stelle des Bodenbelages wiedergegeben, die mit (4) bezeichnet ist.

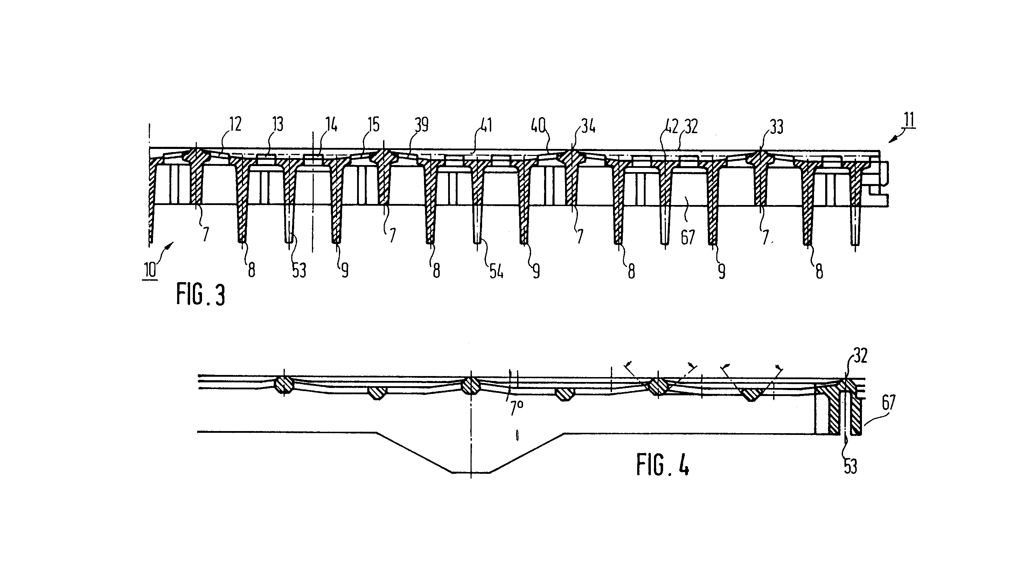

Ein solcher Kunststofformkörper (2, 3 bzw. 5, 6) weist auf seiner Unterseit eine Mehrzahl paralleler Roststäbe (7-9) in sich ständig wiederholender Reihenfolge in der durch den Schnitt III-III der Fig. 1 gekennzeichneten Plattenrichtung auf. Zwischen den Roststäben, die an der Unterseite (10) der Kunststofformkörper angeordnet sind, befindet sich im Plattenbereich (11) eine Mehrzahl paralleler Schlitze (11-15) in ebenfalls ständig sich wiederholender Anordnung in der durch den Schnitt III-III der Fig. 1 gekennzeichneten Richtung. Wie sich aus der Darstellung der Fig. 1 ergibt, sind diese Schlitze (12-15) den ihnen zugeordneten Roststäben (7-9) jeweils parallel und außerdem in Feldern angeordnet, die im randnahen Bereich an einer Plattenkante mit (16-20) und an der gegenüberliegenden Plattenkante mit (21-26) bezeichnet sind. Mit diesen randnahen Feldern sind jeweils zwei mittlere Felder ausgefluchtet, die mit (27 und 28) in dem Kunststofformkörper (2) nach Fig. 1 bezeichnet sind. Die Felder werden von sich rechtwinklig kreuzenden Rippen umgrenzt, von denen die parallel zu den miteinander verbundenen Plattenkanten verlaufenden Rippen mit (29-32) und die dazu rechtwinklig verlaufenden Rippen mit (33-38) bezeichnet sind. Wie die Darstellung der Fig. 3 am Beispiel der Rippen (32-34) zeigt, sind zwischen den Rippen Schrägflächen (39-41) vorgesehen, die von den Flanken der Rippen ausgehen und auf einem ebenen Taschenboden (42) enden.

Die rechtwinklig zu den Schlitzen (12-15) verlaufenden Plattenseiten sind verzahnt. Die Zähne haben Zahnköpfe (46) mit Außenkanten, welche in einer Ebene liegen und eine trapezförmige Form mit schrägen Zahnflanken (47, 48), sowie Zahnlückengründen (49), welche parallel zu den Zahnköpfen (46) und untereinander ausgefluchtet verlaufen. Wie die Darstellung der Fig. 2 zeigt, ist die Teilung der Verzahnung so gewählt, daß die gegenüberliegenden Plattenkanten (50, 51) der benachbarten plattenförmigen Kunststoffkörper (2, 3 bzw. 5, 6) ausgefluchtet sind.

In einer mit den Roststäben (8, 9) und der Platte des Formkörpers einteilig ausgeführten Leiste (67) befinden sich Aussparungen (53, 54) in der Unterseite jedes Zahnes. Diese Aussparungen übergreifen nicht dargestellte Rostträger formschlüssig. Die den Zahnreihen zugeordneten Kanten benachbarter plattenförmiger Kunststoffkörper (2, 3) sind dann ausgefluchtet. Diese sind durch den Eingriff der Zähne in Richtung der Plattenkanten und durch den Eingriff der Aussparungen und der Rostträger versperrt, so daß benachbarte plattenförmige Kunststoffkörper im Bodenbelag in Längs- und Querrichtung nicht verschiebbar sind.

Wie sich aus der Darstellung der Fig. 1 ergibt, sind die Rippen (32 bzw. 32') der Randfelder (16-26) an den Verzahnungen (46 und 49) so angeordnet, daß sie die Zahnflanken (47, 48) schneiden. Sie sind über den Rostträgeraussparungen (53, 54) angeordnet. Dadurch ergibt sich eine Verstärkung der Plattenränder, welche insbesondere aus der Darstellung der Fig. 4 ersichtlich ist.

Die Randfelder (16-26) haben die gleiche Flächengröße wie die mit ihnen ausgefluchteten Felder (27 und 28). Das ist durch das Maß A in Fig. 1 dargestellt. In den Feldern ist die Schlitzanordnung gleich. Wie die Fig. 2 zeigt, befinden sich in jedem Feld zwei jeweils bis etwa an die Rippen reichende Außenschlitze (55, 56), die parallel zu den benachbarten Rippen, wie am Beispiel der Rippen (33, 34) wiedergegeben, verlaufen. Diese Schlitze reichen bis an die querverlaufenden Rippen, wie am Beispiel der Rippen (29, 30) gezeigt ist.

Außerdem befinden sich in den Feldern mittlere Schlitze (57, 58 bzw. 59, 60). Diese Schlitze sind bei (61, 62) unterbrochen. Die Unterbrechungen befinden sich im Taschenboden (42), so daß an diesen Stellen ein durchgehender und dadurch verstärkter Bereich entsteht.

Die Kunststofformkörper weisen einen rechtekkigen Grundriß auf, dessen lange Seiten (43, 44) mit den Verzahnungen (46, 49) versehen sind.

Die kurzen Seiten (63, 64) sind mit Vorsprüngen (66) versehen, die sich in benachbarten Formkörpern (5, 6) aufeinander abstützen und dadurch einen Formschluß längs der ihnen zugeordneten Formkörperkanten bewirken.

Wie sich aus der Darstellung der Fig. 3 ergibt, sind die in den Taschen angeordneten Roststäbe (8, 9) gegenüber den unter den Rippen angeordneten Roststäben (7) verlängert. Hierdurch ergibt sich trotz der Plattenvertiefung eine gleiche Festigkeit über den gesamten Querschnitt der plattenförmigen Kunststofformkörper.

Die dargestellten Kunststofformkörper lassen sich im Spritzgußverfahren in Formen von Extrudern aus thermoplastischem Kunststoff herstellen.

**Patentansprüche**

1.  Bodenbelag aus plattenförmigen Kunststofformkörpern (2, 3; 5, 6), welche auf ihrer Unterseite (10) eine Mehrzahl paralleler Roststäbe (7-9) und in der Platte untereinander und zu den Roststäben (7-9) parallele Schlitze (11-15) aufweisen, die in Feldern (16-28) angeordnet sind, welche von den sich rechtwinklig kreuzenden und sich über die Trittfläche erhebenden Rippen (29-38) begrenzt sind, welche Vertiefungen mit Schrägflächen (39-41) aufweist, die von den Flanken der Rippen (29-38) ausgehen und auf einem ebenen Taschenboden (42) enden, wobei die rechtwinklig zu den Schlitzen (11-15) verlaufenden parallelen Plattenseiten (43-44) derart verzahnt sind, daß bei ineinandergreifenden Zahnköpfen (46) und Zahnlücken (49) die gegenüberliegenden Plattenkanten (50, 51) der mit Hilfe von Aussparungen (53, 54) in den Roststäben mit Rostträgern formschlüssigen Formkörper (2, 3; 5, 6) ausgefluchtet sind, dadurch gekennzeichnet, daß die Rippen (32) der Randfelder (16-26) an den Verzahnungen (46-49) die Zahnflanken (47, 48) schneiden und über den Rostträgeraussparungen (53, 54) angeordnet sind.

2.  Bodenbelag nach Anspruch 1, dadurch gekennzeichnet, daß die Randfelder (16-26) die gleiche Flächengröße wie die mit ihnen ausgefluchteten Felder (27, 28) aufweisen und in den Feldern gleiche Schlitzanordnungen vorgesehen sind, die aus Randschlitzen (55, 56), welche parallel je einer Rippe (33, 34) verlaufen und bis zu den Rippenflanken reichen, sowie aus Mittelschlitzen (57-60) bestehen, die parallel zu den Randschlitzen (55, 56) verlaufen und im Taschenboden (42) Unterbrechungen (61, 62) aufweisen, die nebeneinander liegen.

3.  Bodenbelag nach einem der Ansprüche 1 oder 2, dadurch gekennzeichnet, daß die Kunststofformkörper (2, 3; 5, 6) einen rechteckigen Grundriß aufweisen, dessen lange Seiten (43, 44) mit der Verzahnung (46, 49) versehen sind.

4.  Bodenbelag nach Anspruch 1 und einem der Ansprüche 2 oder 3, dadurch gekennzeichnet, daß die Roststäbe (7-9) unterschiedliche Höhen aufweisen, derart, daß sich über die Plattenebene gleiche Festigkeiten ergeben.

5.  Bodenbelag nach Anspruch 4, dadurch gekennzeichnet, daß die mit den Rippen (34) versehenen Roststäbe (7) kürzer als die in den Taschen (42) angeordneten Roststäbe (8, 9) ausgeführt sind.

FIG. 1

FIG. 2

FIG. 3

FIG. 4

EP 0 472 206 A1

**Europäisches Patentamt**

**EUROPÄISCHER RECHERCHENBERICHT**

Nummer der Anmeldung

**EP 91 11 4150**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 402 046  (H. MICHEL)<br>* Seite 10, Zeile 20 - Seite 12, Zeile 18; Abbildungen 1-3 *<br>– – – | 1-3 | A 01 K 1/015 |
| A | DE-U-8 214 570  (FRIEDRICH KG)<br>* Seite 5, Zeile 23 - Seite 7, Zeile 10; Abbildung 1 *<br>– – – | 1,3 | |
| A | GB-A-2 136 472  (NORTON ENGINEERING ALLOYS CO. LTD.)<br>* Zusammenfassung; Abbildungen *<br>– – – – – | 1,2 | |

| | | | RECHERCHIERTE SACHGEBIETE (Int. Cl.5) |
|---|---|---|---|
| | | | A 01 K<br>E 04 F |

Der vorliegende Recherchenbericht wurde für alle Patentansprüche erstellt

| Recherchenort | Abschlußdatum der Recherche | Prüfer |
|---|---|---|
| Berlin | 27 September 91 | MARTIN DEL RIO A |